# EUROPÄISCHE PATENTANMELDUNG

(11) **EP 0 865 185 A2**
(43) Veröffentlichungstag der Anmeldung: **16.09.1998**
(21) Anmeldenummer: 98103573.6
(22) Anmeldetag: 02.03.1998
(51) Int. Cl.: H04M 1/53

(54) **Nachrüstbare Schaltungsanordnung für Hook-Flash-Signalgebung**

(30) Priorität: 12.03.1997 DE 19711981
(71) Anmelder: DeTeWe - Deutsche Telephonwerke Aktiengesellschaft & Co., 10997 Berlin (DE)
(72) Erfinder: Baumeister, Rolf, 10551 Berlin (DE)

(57) **Zusammenfassung**

Für analoge Fernsprechendgeräte mit Mehrfrequenz-Wahlverfahren wird eine Schaltungsanordnung für nachrüstbare Vorschalteinrichtungen zum Nutzen zusätzlicher Leistungsmerkmale im digitalen Fernsprechnetz durch Erzeugen eines Hook-Flash-Signals mittels der Erdtaste vorgeschlagen, bei der die Vorschalteinrichtung (FW) zwischen den Leitungsadern (LA, LB) und dem Erde-Steuersignal-Anschluß (E) gelegt ist, wobei zwei Dioden (D2, D3) der Entkopplung dienen und die Vorschalteinrichtung (FW) über eine eigene Spannungsquelle (U) verfügt, eine Zeitgeberschaltung (ZG) mit einem steuerbaren Schalter (K) aufweist und über einen Widerstand (R2) an den Erde-Steuersignal-Anschluß (E) geschaltet ist.

## Beschreibung

Die Erfindung betrifft eine Schaltungsanordnung für nachrüstbare Vorschalteinrichtungen für analoge Fernsprechendgeräte mit Mehrfrequenz-Wahlverfahren zum Nutzen zusätzlicher Leistungsmerkmale im digitalen Fernsprechnetz durch Erzeugen eines Hook-Flash-Signals mittels der Erdtaste.

Schaltmittel zur definierten kurzzeitigen Unterbrechung von Fernsprechleitungen sind bekannt (DE 27 23 985 A1, DE 29 20 944 C2). Diese als "Flash-Taste" bezeichneten Einrichtungen dienen dem Einleiten von Nachwahl-Operationen. Dabei ist eine festgelegte Zeit der Unterbrechung der Leitungsschleife unabhängig von der manuellen Betätigungszeit des Schaltmittels gefordert, die typisch zwischen 170 ms und 310 ms liegt.

Um im digitalen Fernsprechnetz mit einem analogen Fernsprechendgerät die Leistungsmerkmale Rückfrage, Makeln und Dreierkonferenz nutzen zu können, muß das Endgerät zusätzlich zum Mehrfrequenz-Wahlverfahren die Möglichkeit zur definierten Schleifenunterbrechung aufweisen. Eine große Anzahl von Endgeräten ist jedoch nur in der Lage, ein Hook-Flash-Signal der Länge von 80 ms zu erzeugen, wie es in herkömmlichen relekommunikations-Anlagen benötigt wird.

Der Erfindung lag die Aufgabe zugrunde, für derartige analoge Fernsprechendgeräte eine Schaltungsanordnung aufzuzeigen, die es ermöglicht, mit den Endgeräten zusätzliche Leistungsmerkmale des digitalen Fernsprechnetzes zu nutzen.

Diese Aufgabe ist durch die Erfindung gelöst, wie sie im Anspruch 1 dargelegt ist. Weitere vorteilhafte Maßnahmen sind Gegenstand der Unteransprüche.

Anhand einer Zeichnung, die das Blockschaltbild eines analogen Endgerätes mit einem vorgeschalteten Flash-Wandler zeigt, wird die Erfindung nachfolgend näher erläutert.

Analoge Fernsprechendgeräte mit Mehrfrequenz-Wahlverfahren verfügen über einen vierpoligen Steckeranschluß, der die Anschlußpunkte für die Leitungsadern LA, LB, einer Weckerader W und einen Erde-Steuersignal-Anschluß (E) aufweist. Allgemein wird der Erde-Steuersignal-Anschluß (E) bei der Betätigung der Erdtaste des Endgerätes mit dem positiven Pol der Speisestromquelle verbunden, z. B. dem der Telekommunikations-Anlage.

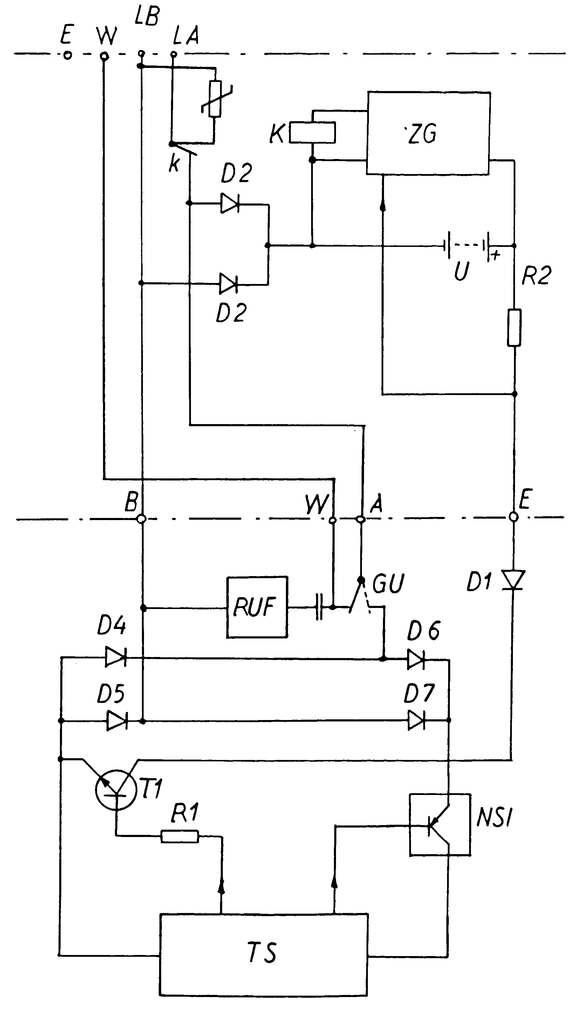

In der Zeichnung ist eine Vorschalteinrichtung, ein Flash-Wandler FW, vor ein Endgerät TE mit einer elektronischen Erdtaste geschaltet. Die elektronische Erdtaste zum Erzeugen eines Erde-Steuersignals ist als Transistor T1 mit an der Basis geschaltetem Widerstand R1 und Diode D1 dargestellt, die von der Telefonschaltung TS bei der Betätigung der Erdtaste aktiviert wird.

Im Gesprächszustand nimmt der Gabelumschaltekontakt GU die gestrichelt gezeichnete Lage ein. In diesem Fall fließt ein Schleifenstrom zwischen den Anschlußpunkten LA und LB bzw. A und B der Leitungsadern des Endgerätes TE, wobei die vier Dioden D4 bis D7 einen Verpolungsschutz bilden. Wie bereits eingangs dargelegt, kann über den NSI-Schalter ggf. ein Hook-Flash-Signal von 80 ms Länge durch die Telefonschaltung TS erzeugt werden.

Um ein längeres Signal mit Hilfe der Erdtaste abgeben zu können, dient die Vorschalteinrichtung FW. Diese weist eine Spannungsquelle U auf, deren positiver Pol über einen Widerstand
R2 mit dem Erdanschluß E des Endgerätes TE verbunden ist. Bei Betätigung der Rückfragetaste des Endgerätes TE liefert die Telefonschaltung TS für etwa 500 ms ein Erde-Steuersignal, das den Transistor T1 leitend steuert. Von der Spannungsquelle U der Vorschalteinrichtung FW fließt dann ein Strom über den Widerstand R2, die Diode D1 und den Transistor T1. Je nach Polarität der Anschlußadern LA, LB fließt der Strom über die Verpolungsdiode D5 und Entkopplungsdiode D3 bzw. D4 und D2 zur Spannungsquelle U zurück. Der durch diesen Strom verursachte Spannungsabfall am Widerstand R2 wird von einer Zeitgeberschaltung ZG als Startsignal ausgewertet. Die Zeitgeberschaltung ZG wirkt auf einen steuerbaren Schalter ein, z. B. ein Relais K oder einen elektronischen Schalter, das mittels seines Kontaktes k für die Dauer des Hook-Flash-Signals von 170 bis 310 ms die Leitungsschleife unterbricht.

Als Spannungsquelle des Vorschaltgerätes FW dient eine Batterie, ein Netzteil oder eine Schaltung, die die nötige Energie aus dem Schleifenstrom gewinnt und ggf. in einem Akkumulator speichert.

Die Anschlußpunkte LA, LB, W und E des Vorschaltgerätes FW liegen auf einem TAE-F-Stecker, die Übergabeanschlußpunkte A, B, W und E zum Endgerät TE auf einer TAE-F-Buchse.- Die Anschlußpunkte LA, LB, W, E, A und B können auch in einem TAE-N-Stecker kombiniert sein, wie für Vorschaltgeräte üblich.

Die Vorschalteinrichtung FW kann in Kombination mit einem Gebührenzähler und ggf. mit FSK-Demodulatoren, die der Anzeige der anrufenden Teilnehmernummer dienen, zu einem gemeinsamen Vorschaltgerät zusammengefaßt werden.

## Patentansprüche

1. Schaltungsanordnung für nachrüstbare Vorschalteinrichtungen für analoge Fernsprechendgeräte mit Mehrfrequenz-Wahlverfahren zum Nutzen zusätzlicher Leistungsmerkmale im digitalen Fernsprechnetz durch Erzeugen eines Hook-Flash-Signals mittels der Erdtaste, dadurch gekennzeichnet, daß die Vorschalteinrichtung (FW) zwischen den Leitungsadern (LA, LB) und dem Erde-Steuersignal-Anschluß (E) gelegt ist, wobei zwei Dioden (D2, D3) der Entkopplung dienen, daß die Vorschalteinrichtung (FW) über eine eigene Spannungsquelle (U) verfügt, eine Zeitgeberschaltung (ZG) mit einem steuerbaren Schalter (K) aufweist und über einen Widerstand (R2) an den Erde-Steuersignal-Anschluß (E) geschaltet ist.

2. Schaltungsanordnung nach Anspruch 1, dadurch gekennzeichnet, daß ein Spannungsabfall am Widerstand (R2) des Erde-Steuersignal-Anschlusses (E) als Startsignal für die Zeitgeberschaltung (ZG) dient.

3. Schaltungsanordnung nach Anspruch 1 und 2, dadurch gekennzeichnet, daß der steuerbare Schalter (K) eine Leitungsader (z. B. LA) für eine definierte Zeit unterbricht.

4. Schaltungsanordnung nach Anspruch 1 bis 3, dadurch gekennzeichnet, daß als steuerbarer Schalter (K) ein Relais eingesetzt ist.

5. Schaltungsanordnung nach Anspruch 1 bis 3, dadurch gekennzeichnet, daß als steuerbarer Schalter (K) ein elektronischer Schalter dient.

6. Schaltungsanordnung nach Anspruch 1, dadurch gekennzeichnet, daß als Zeitgeberschaltung (ZG) ein RC-Timer Vervendung findet.

7. Schaltungsanordnung nach Anspruch 1, dadurch gekennzeichnet, daß als Zeitgeberschaltung (ZG) ein Quarz-Oszillator Verwendung findet.

8. Schaltungsanordnung nach Anspruch 1, dadurch gekennzeichnet, daß als Zeitgeberschaltung (ZG) ein Mikrocontroller Verwendung findet.
